# FASCICULE DE BREVET EUROPEEN

(11) **EP 0 495 723 B1**
(45) Date de publication et mention de la délivrance du brevet: **03.04.1996**
(21) Numéro de dépôt: 92400120.9
(22) Date de dépôt: 17.01.1992
(51) Int. Cl.: C03B 5/00, C03B 5/027, F27B 3/19, B22D 41/08, B22D 41/04, C21C 5/52, F27D 11/04

(54) **Procédé et dispositif d'obtention de fibres minérales**
Verfahren und Vorrichtung zum Herstellen von Mineralfasern
Method and apparatus for making mineral fibres

(30) Priorité: 18.01.1991 FR 9100547; 18.01.1991 FR 9100548
(43) Date de publication de la demande: 22.07.1992
(73) Titulaire: ISOVER SAINT-GOBAIN, F-92400 Courbevoie (FR)
(72) Inventeur: Aube, Jean-Yves, F-60600 Clermont (FR); Giry, Emmanuel, F-60140 Liancourt (FR)
(74) Mandataire: Menes, Catherine

(56) Documents cités:
- EP-A- 0 128 965
- EP-A- 0 160 185
- FR-A- 452 578
- FR-A- 1 069 730
- FR-A- 2 535 835
- FR-A- 2 575 150
- JP-A-63 176 313
- US-A- 3 390 219

## Description

L'invention concerne les techniques d'obtention de fibres minérales faites d'un matériau à point de fusion élevé tel un verre basaltique, un verre à base de laitiers de hauts fourneaux ou toute autre composition verrière analogue. Plus précisément l'invention a trait au problème du transfert du matériau à l'état fondu entre son enceinte de fusion et une machine de fibrage dite à centrifugation libre, c'est-à-dire d'une machine constituée par une ou plusieurs roues de centrifugation mues à grande vitesse à la périphérie desquelles est déversé le matériau étirable qui est entraîné par ces roues avant d'être pour partie renvoyé vers la roue suivante et, pour la partie restante, transformé en fibres sous l'effet de la force centrifuge. Les fibres sont immédiatement entraînées vers un dispositif de réception au moyen de courants gazeux émis perpendiculairement à la direction de formation des fibres.

Les techniques brièvement évoquées ci-dessus sont plus particulièrement mises en oeuvre en vue de la production de laine dite de roche, utilisée notamment pour la fabrication de produits isolants. Elles présentent le grand avantage de permettre le traitement de verres à hauts points de fusion conduisant ainsi à des produits ayant une bonne résistance à l'épreuve du feu et ceci avec un coût de production et de matières premières relativement faibles du moins par comparaison avec celui d'autres techniques de fibrage. Toutefois ce coût modéré est en grande partie dû à une certaine rusticité de la technique notamment pour ce qui concerne le conditionnement du verre.

Il est en effet bien connu que le jugement porté sur une installation de fibrage - notamment en termes de rendement en fibres et de qualité des fibres produites - sera d'autant plus favorable que la machine de fibrage est alimentée avec un verre parfaitement conditionné. Par conditionnement on entend, conforme à la valeur de consigne du point de vue de sa composition, de sa température et de son débit, sans irrégularités importantes constatées sur ces points. Les fours traditionnels de verrerie ne peuvent assurer ce conditionnement d'une manière satisfaisante car les réfractaires sont rapidement corrodés par les verres utilisés dans ce type de techniques, sauf à admettre des températures en sortie de four inférieures à 1450°C alors que les conditions optimales de fibrage sont réunies pour une température voisine de 1600°C ou même légèrement supérieure. De fait, dans les techniques de fibrage ici examinées, la fusion du verre est menée généralement dans une enceinte de type cubilot suivant un mode voisin de celui pratiqué en fonderie encore que les difficultés particulières peuvent apparaître du fait de la différence de nature des matériaux fondus. Le cubilot est un four capable de restituer des débits en matériaux fondus particulièrement élevés avec un combustible assez bon marché, le coke, et des frais d'entretien très réduits. Le cubilot est chargé par le haut alternativement avec des couches du matériau à fondre et des couches de coke ou directement par des mélanges de coke et de matériau à fondre et la combustion du coke, grâce à de l'air ou de l'oxygène pur insufflé dans la partie basse du cubilot, assure le dégagement de chaleur nécessaire à la fusion du verre. Le mélange fondu s'échappe de manière continue par un trou de coulée située au voisinage de cette partie basse. En régime établi, l'alimentation régulière en charges alternées a, en principe, pour effet la formation d'un empilement de strates d'une épaisseur et d'un niveau stationnaires, empilement auquel se substitue au niveau des tuyères la zone de combustion du coke et de fusion du verre.

De par la proximité même de la zone de fusion et des tuyères qui insufflent le comburant, il existe au niveau du trou de coulée d'intenses turbulences dues notamment à la compétition permanente entre la matière fondue et les gaz de combustion qui cherchent de même à s'échapper. De ce fait, l'écoulement est très saccadé. D'autre part, un cubilot n'est jamais aussi stable que l'on pourrait le souhaiter et il arrive par exemple qu'une couche de coke s'écoule brutalement au lieu de se consumer petit à petit, avec notamment pour conséquence la présence de blocs de coke infondus dans le flux de matériau fondu ; outre la modification importante du débit de matériau fondu qui en résulte, cet échappement de coke est également fort nuisible à la longévité des roues de centrifugation généralement réalisées en acier réfractaire. De plus de telles instabilités du cubilot peuvent conduire à des variations de la température et par conséquence directe, de la viscosité du matériau fondu donc de son comportement lors du fibrage.

A ces hétérogénéités de débit et de température, viennent s'ajouter des hétérogénéités de composition de la matière fondue, ne serait-ce que du point de vue de la teneur en oxydes ferreux et ferriques, la réduction en fer métallique des oxydes ferreux n'étant jamais totale et variant selon le caractère plus ou moins réducteur de l'ambiance du cubilot ; d'autre part, même si la fonte produite par cette réduction des oxydes de fer est plus dense que le verre fondu et s'accumule au fond du cubilot, il n'est pas rare de la voir s'échapper, certes en faible proportion, avec le flux de verre fondu avec un risque considérable de dégradation des roues de centrifugation.

Pour obvier ces difficultés, il est connu du brevet français FR-B-2 572 390 d'interposer sur le trajet du matériau fondu un avant-creuset formant une réserve présentant une surface libre suffisante pour amortir au moins partiellement les variations de débit à la sortie de cette réserve. Le volume de cette réserve est de préférence petit et correspond par exemple à une durée de fonctionnement comprise entre 30 secondes et 3 minutes.

Cette petitesse est voulue notamment pour limiter le refroidissement du matériau fondu qui y séjourne et la constitution de zones mortes, c'est-à-dire de zones dans lesquelles le matériau serait à l'état dévitrifié et non plus à l'état fondu, la fraction du volume de la réserve occupée par de telles zones mortes étant de fait inutilisable. Néanmoins, il est clair que plus le volume de la réserve est petit, moins grand sera l'effet d'homogénéisation du débit et éventuellement de la composition du verre et donc plus il sera difficile de contrôler très précisément les paramètres clefs du procédé de fibrage que sont le débit, la température et la composition du verre fondu. Par ailleurs, même si l'intensité du refroidissement est limitée, les pertes thermiques n'en sont pas moins réelles, l'abaissement de la température dans la réserve étant par exemple de l'ordre de 50-100°C - ce qui signifie que le matériau doit être surchauffé d'autant dans le cubilot. Or de par sa taille et le principe même qui préside à son fonctionnement, le cubilot est un type de four qui se prête mal à une régulation poussée de la température.

D'autre part, le problème fondamental d'une telle réserve constituée par une surface libre avec un écoulement par un trop plein est que, par définition, elle ne permet pas la maîtrise du débit mais seulement une limitation des variations de celui-ci. Le débit moyen est donc imposé par le cubilot et ne peut être modifié avec toute la souplesse et la rapidité souhaitable pour tenir compte des conditions de marche effectives de la machine de fibrage et notamment de la position et de la répartition du jet de matériau fondu sur la première des roues de centrifugation.

Il est connu de la demande de brevet française FR-A-2 575 150 de prévoir sur le trajet du matériau fondu un four de rétention. Pour créer un écoulement régulier et continu de la matière fondue, on fait pivoter le four de sa position horizontale vers sa position verticale à une vitesse telle que la surface de la matière fondue reste à une hauteur constante par rapport à l'orifice de coulée qui se trouve dans la paroi du four de rétention.

Pour tenir la matière fondue à une hauteur constante au-dessus de l'orifice de coulée, un grand mouvement pivotant du four de rétention est nécessaire. Un tel système est complexe et très coûteux. Par ailleurs, ce procédé n'évite pas le passage des oxydes ferreux et ferriques avec le flux de verre fondu.

De la demande de brevet WO-A-90 02711, il est connu d'opérer en quelque sorte une fusion du matériau en deux étapes, une étape de fusion dans le cubilot et une étape de surchauffage dans la réserve à l'aide d'un dispositif de chauffage par plasma. Le matériau fondu dans le cubilot voit ainsi sa température augmentée de l'ordre de 20 à 150°C par rapport à sa température de sortie. Un tel système permet un contrôle effectif de la température du verre fondu envoyé sur la première roue de centrifugation mais au prix d'une installation de chauffage relativement complexe qui détonne un peu avec les autres éléments plus "rustiques", la juxtaposition d'éléments de valeurs technologiques très différentes étant de préférence à éviter sur un site de production. Par ailleurs, la technique de chauffage par plasma ne peut opérer efficacement que sur des petites quantités de verre fondu donc avec une réserve d'un volume relativement petit.

Outre les inconvénients déjà signalés à ce propos, il doit être noté que cela interdit en pratique des ajustements de la composition de verre fondu au niveau de la réserve. Or la possibilité de tels ajustements permet d'alimenter le cubilot avec une composition standard toujours identique tout en adaptant la composition finale au produit fabriqué ou inversement de corriger rapidement les écarts non désirés des compositions des matières premières.

D'autre part, il ne doit pas être perdu de vue le fait que le problème de base de la fusion dans un cubilot est celui de l'hétérogénéité des débits et ce problème n'est résolu que de manière imparfaite dans les publications PCT et française précitées. Dans la demande de brevet WO-90 02711, l'écoulement du verre fondu s'effectue non par un trop plein mais par un trou de coulée situé au fond de la réserve protégé par un barrage immergé qui interdit l'écoulement de la fonte qui plus dense se décante au fond de la réserve. Le débit de matériau fondu est entièrement subordonné à la hauteur de verre fondu au-dessus du trou de coulée, hauteur qui dépend d'une part du débit d'alimentation de la réserve et d'autre part des dimensions de la réserve ou plus exactement de celles de sa surface libre. Le parti pris d'une réserve relativement petite, dimensionnée en vue d'un chauffage par plasma limite donc les capacités de régulation du débit.

Même lorsque l'écoulement du verre se fait par un trou de coulée au fond de la réserve, avec de plus des difficultés supplémentaires liées à l'usure des buses de coulée, et donc la nécessité de leurs remplacements, due notamment à la nature très corrosive des verres basaltiques et aux températures très élevées (bien supérieures à 1000°C) et également liées au fort penchant de ces verres à dévitrifier à des températures à peine inférieure aux températures convenant au fibrage, c'est-à-dire pour lesquelles la viscosité du verre est bien adaptée à un étirage en fibres. En effet, même si la buse n'est pas refroidie, il existe une tendance à voir se former à son niveau, au contact de l'air ambiant plus froid, une croûte de matière dévitrifiée qui croît plus ou moins et qui diminue la section de passage du verre ; ce phénomène peut certes être quelque peu enrayé mais complique fortement toute tentative de régulation du débit via une modification permanente de la section d'ouverture de l'orifice de coulée.

Ce phénomène de dévitrification est particulièrement critique dans les phases de redémarrage de la machine de fibrage car il se forme lors de la reprise de la coulée du cubilot un bouchon qui obture totalement l'orifice de coulée. Ce bouchon doit être éliminé par chauffage, par exemple au moyen d'un chalumeau, jusqu'à ce que le flux soit suffisamment important pour apporter l'énergie pour entretenir la coulée par un lessivage permanent de la croûte en cours de formation. Ce chauffage par un chalumeau entraîne des risques d'endommagement de la buse de coulée par une surchauffe.

Par ailleurs, même en marche dite continue, la coulée de matériau fondu provenant du cubilot est régulièrement interrompue notamment afin de procéder au piquage de la fonte de fer accumulée au fond du cubilot, opération qui interrompt donc la production de fibres à un moment éventuellement inopportun. Il est clair que cet arrêt ne peut être évité que dans la mesure où le volume de la réserve est relativement grand et correspond par exemple à une durée de production de l'ordre de 5 à 10 minutes, temps moyen nécessaire pour le piquage de la fonte.

Le brevet français FR-A-1 069 730 divulgue un procédé de formation de fibres à partir d'un matériau thermoplastique à haut point de fusion dans lequel le matériau est fondu directement dans un creuset. Ledit matériau s'écoule vers un avant-creuset jusqu'à ce que la quantité du matériau soit suffisante. Le matériau s'écoule par dessus la paroi du bec et tombe par gravité vers la machine de fibrage. Rien ne suggère que le creuset puisse constituer une réserve pour le matériau déjà fondu dans une autre enceinte de fusion. Le chauffage est entièrement électrique.

L'invention vise à l'amélioration des techniques d'obtention de fibres à partir d'un matériau thermoplastique à haut point de fusion notamment du type des verres basaltiques ou analogues permettant une maîtrise plus grande du problème de la distribution de ce matériau vers la machine de fibrage et notamment un meilleur contrôle du débit.

L'invention a plus particulièrement pour objet un procédé d'obtention de fibres minérales à partir d'un matériau thermoplastique à haut point de fusion consistant dans la fusion dudit matériau et sa distribution à l'état fondu sous forme d'un jet, sur une machine de fibrage, le matériau fondu formant sur son trajet vers la machine de fibrage une réserve où est opérée une régulation du débit, caractérisé par un contrôle de la hauteur de matériau fondu à l'aplomb de l'orifice de coulée par inclinaison de la réserve, l'inclinaison de ladite réserve étant effectuée selon un centre ou un axe de rotation placé d'une manière telle que le niveau de verre est inchangé ou pratiquement inchangé du fait de l'inclinaison et la coulée s'effectuant par le fond d'un appendice de la réserve dont le volume est au plus de l'ordre du dixième et, de préférence, de l'ordre du vingtième du volume total de la réserve.

Selon l'invention, le débit est donc régulé par une régulation de la pression au niveau de l'orifice de coulée, régulation qui permet de compenser les écarts de débits dus au mode de fonctionnement quasi pulsatoire du cubilot et surtout les variations plus importantes dues notamment à l'interruption de l'alimentation pour extraire la fonte s'accumulant au fond du cubilot. Il est également possible de jouer sur cette inclinaison pour charger brutalement la buse de coulée au démarrage d'une installation, la réserve étant alors dans un premier temps remplie en laissant la buse découverte avant d'être rapidement basculée de sorte que le niveau du verre au-dessus de l'orifice de coulée passe quasi instantanément d'un niveau zéro au niveau de travail ce qui facilite beaucoup l'amorçage de la coulée.

A l'inverse la buse peut être découverte sans interrompre l'alimentation par le cubilot ce qui permet de la remplacer en marche.

Il est clair que ce deuxième point n'est possible que dans la mesure où le volume de la réserve est suffisant pour alimenter la machine de fibrage pendant toute la durée de l'interruption et qu'une régulation fine passe avant tout par une surface libre relativement grande. Il est ainsi avantageux de prévoir un volume correspondant au moins à 8 minutes et de préférence à plus de 10 minutes de production de la machine de fibrage.

L'invention suppose donc une réserve dont les dimensions sont grandes dans laquelle on opère de préférence un chauffage de base du verre fondu destiné au moins à compenser le refroidissement faisant suite au séjour du verre dans cette réserve et de préférence apte à compléter le chauffage du matériau fondu afin de porter sa température à une température voisine de la température de fibrage. Pour garantir un bon fonctionnement des moyens de chauffage, l'inclinaison de la réserve est menée selon un centre ou un axe de rotation placé d'une manière telle que le niveau de verre reste inchangé - ou quasi inchangé. Dans ce cas, il est possible d'utiliser des brûleurs, notamment des oxy-brûleurs, qui seront à distance constante de la surface de verre fondu ; on peut également utiliser des électrodes dites plongeantes donc fixées par le dessus, la hauteur d'électrode baignée par le verre restant constante de sorte que les conditions électriques ne sont pas modifiées quand on fait varier l'inclinaison de la réserve.

Cette inclinaison à niveau de verre constant est d'autant plus facile à réaliser que l'orifice de coulée est excentré. C'est pourquoi la coulée de verre fondu est réalisée à partir d'un appendice de la réserve, dont le volume est d'au plus de l'ordre du dixième et de préférence de l'ordre du vingtième du volume total de la réserve de manière à amplifier les différences de hauteurs résultant de l'inclinaison et dont le niveau bas est de préférence surélevé par rapport au reste de la réserve afin d'éviter tout risque d'entraînement de la fonte résiduelle avec le flux de matériau distribué à la machine de fibrage.

Dans une variante de l'invention tout particulièrement préférée, un chauffage additionnel du matériau fondu est opéré au niveau de cet appendice afin de contrôler très précisément la température du filet de verre juste au voisinage de l'orifice de coulée. Ce chauffage additionnel est réalisé de préférence par des moyens électriques. Associé au chauffage de base, ceci permet un conditionnement thermique très précis malgré la quasi incapacité qu'il y a à procéder à celui-ci dans une enceinte de fusion traditionnelle pour ce type de technique.

Cette variante particulièrement préférée part de la considération de l'importance d'un conditionnement thermique très précis du matériau fondu et de la quasi incapacité de procéder à celui-ci dans une enceinte de fusion traditionnelle pour ce type de techniques à savoir dans un cubilot. Mais il est considéré par les auteurs de l'invention que cette nécessité première se double de celle d'un certain brassage du matériau fondu et d'un temps de séjour suffisamment long pour permettre ce dernier et obtenir pendant ce brassage une élimination des composants indésirés que sont essentiellement la fonte de fer et les blocs de coke non brûlés. Ces multiples impératifs sont atteints en divisant l'apport thermique en trois parts qui pour être d'inégales importances quantitativement parlant n'en sont pas moins toutes trois décisives pour l'obtention de fibres de qualité. A titre indicatif, la fusion dans le cubilot peut amener le matériau fondu à une température de l'ordre de 1450°C soit pour une température de fibrage de 1600°C, la nécessité d'un gain dans la réserve de l'ordre de 150°C avec une régulation à 5°C par le chauffage additionnel.

Il est ainsi possible de diviser l'apport thermique en trois parts qui pour être d'inégales importances quantitativement parlant n'en sont pas moins toutes trois décisives pour l'obtention de fibres de qualité. En règle générale, le gain de température dans la réserve est compris entre 50 et 250°C, ce qui permet le cas échéant d'utiliser non un cubilot mais un four verrier plus traditionnel dont l'emploi est normalement exclu car les réfractaires avec lesquels sont réalisés ces fours verriers sont incompatibles avec un verre basaltique fondu à plus de 1450°C.

Comme indiqué plus haut, le chauffage additionnel au voisinage de l'orifice de coulée est obtenu de préférence par des moyens électriques à faible inertie pour une régulation fine et rapide, on utilisera par exemple un jeu de deux électrodes alimentées en courant biphasé.

Pour le chauffage de base, on peut utiliser des oxy-brûleurs- dans ce cas les deux électrodes près de l'orifice de coulée sont montées immergées pour les préserver de l'atmosphère oxydante générée par les brûleurs. Ce chauffage de base peut également être conduit par des moyens électriques par exemple à l'aide d'un jeu de trois électrodes alimentées en courant triphasé, une atmosphère contrôlée non oxydante étant créée au-dessus du bain si on choisit un montage du type électrodes plongeantes.

Le procédé selon l'invention est d'autant plus efficace que le chauffage additionnel concerne seulement un petit volume de matière en fusion ce qui peut avantageusement être réalisé en prévoyant une moindre hauteur de matériau fondu à l'aplomb de l'orifice de coulée, le fond de cette partie de la réserve étant situé plus haut, par exemple à mi-hauteur si on mesure à partir du point le plus profond de la réserve, de manière à ce que la fonte plus lourde se décante dans les zones les plus profondes et ne puisse pas s'échapper avec le flux de matériau déversé sur la machine de fibrage. La coulée est ainsi effectuée à partir d'un appendice dont le volume est de préférence d'au plus du dixième du volume total de la réserve et dont le fond est surélevé.

L'invention a également pour objet un dispositif d'obtention de fibres minérales comportant une enceinte de fusion, une réserve constituée par un creuset muni de moyens de chauffage et d'un orifice de coulée et une machine de fibrage, caractérisé en ce qu'il comporte des moyens propres à faire varier l'inclinaison de la réserve selon un centre ou un axe de rotation placé de manière telle que le niveau de verre reste inchangé ou pratiquement inchangé et un bec de coulée muni en son fond de cet orifice de coulée, le bec de coulée ayant un volume d'au plus de l'ordre du dixième et, de préférence, de l'ordre du vingtième du volume total de la réserve.

Les moyens propres à faire varier l'inclinaison de la réserve sont, par exemple, des suspentes à longueurs variables par exemple constituées par des vérins à vis montées sur des rotules.

Le bec de coulée a un niveau bas surélevé et est, de préférence, muni de moyens de chauffage additionnels.

Le chauffage est de préférence obtenu par des électrodes plongeantes, de manière à éviter tout problème d'étanchéité, faites dans un matériau compatible avec le verre et surtout avec la présence d'une certaine quantité de fer dans la fonte. On peut par exemple utiliser des électrodes en graphite. Une atmosphère non oxydante est créée au-dessus du bain de verre fondu pour imiter les problèmes d'oxydation de la partie émergée des électrodes.

Pour assurer un contrôle total du débit de matériau fondu, la réserve est de préférence fixée à des suspentes de longueurs variables, ce qui permet de régler l'inclinaison de la réserve et par là la hauteur de matériau fondu à l'aplomb de l'orifice de coulée.

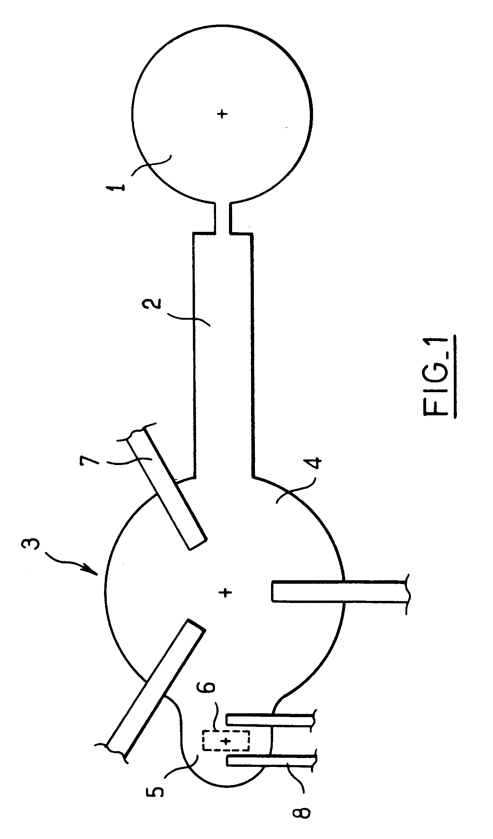

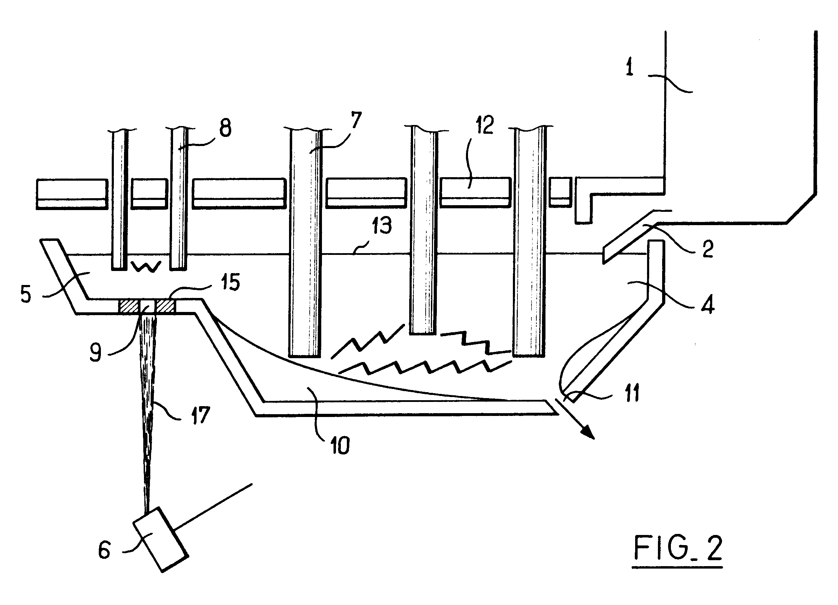

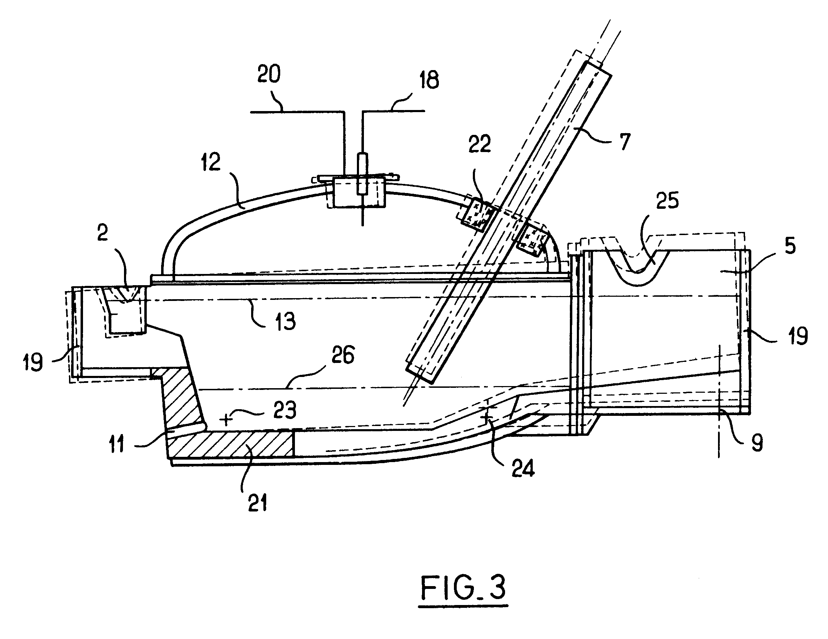

D'autres détails et caractéristiques avantageuses de l'invention ressortent de la description d'un mode de réalisation faite ci-après en référence aux dessins annexés qui représentent :
. **figure 1** **:** une vue de dessus d'un schéma de principe d'un dispositif d'obtention de fibres minérales conforme à l'invention,
. **figure 2** **:** une vue de côté correspondant au schéma de principe de la figure 1,
. **figure 3** **:** une vue de côté plus détaillée illustrant le mode de contrôle du débit proposé selon une des variantes de l'invention.

La figure 1 illustre le principe de l'invention. Le matériau est fondu dans une enceinte de fusion cylindrique du type cubilot 1. A la sortie du cubilot 1, il est conduit par une goulotte 2 dans une réserve 3 formée d'un creuset cylindrique 4 et d'un bec de coulée 5 disposé à la verticale de la première roue de centrifugation 6 de la machine de fibrage. A noter qu'il est aussi possible, voir souhaitable pour limiter les pertes thermiques de travailler avec une réserve alimentée directement par le cubilot. Plus précisément, il s'agit d'une machine de fibrage constituée de 3 ou 4 roues mues rapidement en rotation, deux roues successivement tournant en directions inverses. Un jet de matériau à l'état fondu est déversé sur la bande périphérique de la première roue, y est accéléré de sorte que la matière est renvoyée sur la bande périphérique de la roue suivante d'où elle s'en détache pour être pour partie transformée en fibres sous l'effet de la force centrifuge et pour partie renvoyée vers la roue suivante. Les fibres sont séparées de la matière infibrée au moyen de courants gazeux, émis tangentiellement aux bandes périphériques, qui les entraînent vers une unité de réception. On trouvera plus de détails sur ce type de machine de fibrage notamment dans les brevets européens EP-B-59 152 et EP-B-195 725 et la demande de brevet européen EP-A-439 385.

De nombreuses études ont montré que toutes choses égales par ailleurs, la qualité de l'étirage obtenu par une machine dite à centrifugation libre dépend étroitement de la température du filet de verre déversé sur la première roue de centrifugation.

Ainsi avec une même composition basaltique, sur la même machine et dans les mêmes conditions de fonctionnement, on a pu mesurer une valeur du fasonaire de 210 à 235 puis 290 millimètres de colonne d'eau, respectivement pour des verres à 1410, 1435 et 1500°C. Rappelons que la fasonaire est une valeur mesurée dans des conditions parfaitement normalisées de la résistance à la pénétration d'un courant gazeux dans un échantillon comprimé de 5 g de fibres. Cette valeur du fasonaire est corollée avec la finesse des fibres ou le pouvoir isolant, un produit en fibres minérales est néanmoins qualifié d'une qualité d'autant meilleure que son fasonaire est grand.

Par ailleurs, une température élevée et constante est assez difficile à obtenir directement à partir d'un cubilot. D'autre part, les irrégularités de débit et de composition de la matière fondue sont très fréquemment observées et elles ont elles-aussi une influence très grandes sur la qualité du produit. Le problème de la double maîtrise du débit et de la température est résolu ici par l'association d'un creuset 4 muni de trois électrodes plongeantes 7 et d'un volume relativement important, propre à assurer par exemple 8 à 10 minutes de fonctionnement de la machine de fibrage lorsque la réserve n'est plus alimentée, et d'un bec de coulée 6 qui est lui pourvu de deux électrodes.

Comme il est plus particulièrement visible sur les figures 2 et 3, le bec de coulée 5 a un volume petit par rapport à celui du creuset, par exemple de l'ordre du vingtième de celui-ci. Dans ces conditions, les deux électrodes 8 permettent d'ajuster très précisément et très rapidement la température de la matière fondue. Ces deux électrodes 8 sont de préférence alimentées par un courant biphasé alors que les électrodes 7 du creuset sont alimentées en triphasé pour une question d'équilibre.

Pour écarter tout problème d'étanchéité, on choisit de travailler avec des électrodes plongeante de préférence en graphite, le molybdène matériau couramment utilisé pour des électrodes de fours verriers ne convenant pas ici en raison de la présence de fer métallique dans la composition. Une atmosphère non oxydante doit être maintenue au-dessus du bain de matière fondue afin d'éviter l'usure rapide de ces électrodes. Pour cela, la réserve est munie d'un couvercle 12, qui de plus limite les pertes de chaleur et du gaz naturel est injecté par une conduite 18 dans la cavité ainsi délimitée. Les électrodes traversent le couvercle 12 par des pièces 22 en graphite et sont fixées à des supports ici non représentés, fixes. A noter que la goulotte 2 est de même chapeautée ce qui a pour double effet d'éviter les projections de matière en fusion et de réduire le refroidissement du verre dans son trajet du cubilot à la réserve, trajet qui peut parfois être long (jusqu'à une dizaine de mètres) car l'orifice de coulée 9 est de préférence juste à la verticale de la première roue 6 et qu'il n'est pas toujours possible, ni même souhaitable, de disposer le cubilot trop près de la machine de fibrage.

A noter que l'utilisation d'électrodes donne de plus un moyen d'alerter l'opérateur de la nécessité éventuelle d'effectuer une vidange de la fonte. En effet, lorsque le niveau de fonte de fer monte pour se rapprocher du niveau limite représenté en 26 figure 3, le courant électrique passant dans la masse de verre fondu va fortement diminuer, le fer étant éminemment plus conducteur que celle-ci.

Goulotte 2, creuset 4 et bec de coulée 5 sont de préférence formés de doubles parois 19 refroidies en acier réfractaire par une circulation d'eau 20 intense, de sorte qu'il se forme une couche protectrice 10 de verre dévitrifié. Le fond du creuset 4 dans lequel vient s'accumuler la fonte de fer qui vient à s'échapper du cubilot 2 est lui fait de réfractaires, par exemple du type pisé 21 de carbone. Il est muni d'une ouverture 11 qui peut être bien sûr obturée, au travers de laquelle peut s'effectuer la vidange de la fonte de fer. Le bec de coulée est réalisé de manière similaire et est monté détachable de l'ensemble pour simplifier les problèmes de remplacement de la buse de coulée.

Le contrôle du débit d'alimentation de la machine de fibrage est de préférence obtenu par la combinaison de plusieurs moyens. Le premier est bien entendu dû à l'effet tampon d'un volume important de sorte que les fluctuations du niveau 13 de matière fondu sont largement amorties. L'orifice de coulée 9 est constitué par une buse, de préférence en graphite, un gaz réducteur ou inerte étant soufflé en direction de la buse pour éviter son oxydation.

Le second moyen proposé faisant plus spécialement l'objet de la présente invention et qui sera exposé en se référant plus particulièrement à la figure 3 consiste à pouvoir faire varier l'inclinaison de la réserve. Pour ce faire, la réserve est par exemple suspendue à des vérins à vis articulés par des rotules, les deux suspentes arrières, opposées au bec de coulée peuvent éventuellement être montées fixes. Ces suspentes sont attachées par des goussets à une hauteur indiquée par les croix 23 et 24. En faisant varier la longueur des suspentes, la réserve est ainsi articulée autour d'un axe passant par la croix 23. Cet axe étant très excentré, un faible écart angulaire se traduit par une variation relativement importante de la hauteur de verre fondu au-dessus de l'orifice de coulée 9 d'où une modification du débit. Par contre, on note que le niveau 13 de verre n'est pratiquement pas modifié tandis que le bec de coulée 5 et donc l'orifice de coulée 9 sont eux déplacée d'une distance relativement grande, comme on peut le voir en examinant la position schématisée par des tirets. Dans ces conditions - et dans la mesure où les électrodes plongeantes sont montées fixes et non solidaires des mouvements du creuset, la hauteur de verre baignant les électrodes reste de même constante, ce qui évite l'usure rapide de ces dernières. En jouant sur l'inclinaison de la réserve, il devient notamment possible d'opérer à débit constant, donc à hauteur de verre constante au-dessus de l'orifice de coulée, même si la réserve n'est plus alimentée par la goulotte 2. Il est également possible de jouer sur cette inclinaison pour charger d'un seul coup la buse de coulée au démarrage d'une installation, la réserve étant alors dans un premier temps remplie en laissant la buse découverte avant d'être rapidement basculée de sorte que le niveau de verre au-dessus de l'orifice de coulée passe quasi instantanément d'un niveau zéro au niveau de travail, ce qui facilite beaucoup l'amorçage de la coulée.

A l'inverse, la buse peut être découverte sans interrompre l'alimentation par le cubilot ce qui permet de la remplacer en marche.

Avantageusement les vérins à vis placés de chaque côté de la réserve sont montés indépendants et largement sur-dimensionnés de manière à pouvoir faire basculer de côté la réserve et la vidanger par le trop plein 25 si besoin est.

## Revendications

1. Procédé d'obtention de fibres minérales à partir d'un matériau thermoplastique à haut point de fusion consistant dans la fusion dudit matériau et sa distribution à l'état fondu sous forme d'un jet, sur une machine de fibrage (6), le matériau fondu formant sur son trajet vers la machine de fibrage (6) une réserve (3) où est opérée une régulation du débit, caractérisé par un contrôle de la hauteur de matériau fondu à l'aplomb de l'orifice de coulée par inclinaison de la réserve (3), l'inclinaison de ladite réserve (3) étant effectuée selon un centre ou un axe de rotation placé d'une manière telle que le niveau de verre est inchangé ou pratiquement inchangé du fait de l'inclinaison et la coulée s'effectuant par le fond d'un appendice (5) de la réserve dont le volume est au plus de l'ordre du dixième et, de préférence, de l'ordre du vingtième du volume total de la réserve (3).

2. Procédé selon la revendication 1, caractérisé en ce que le fond dudit appendice (5) est surélevé par rapport à celui de la réserve (3).

3. Procédé selon l'une des revendications précédentes, caractérisé par un chauffage de base dans la réserve (3) et un chauffage additionnel au voisinage de l'orifice de coulée (9) en vue d'un ajustement précis de la température du jet de verre (17) distribué à la machine de fibrage.

4. Procédé selon la revendication 3, caractérisé en ce que ledit chauffage additionnel est électrique.

5. Procédé selon la revendication 4, caractérisé en ce que ledit chauffage additionnel est obtenu au moyen de deux électrodes (8) alimentées en courant biphasé.

6. Procédé selon l'une des revendications 3 ou 4, caractérisé en ce que ledit chauffage de base est électrique.

7. Procédé selon la revendication 6, caractérisé en ce que ledit chauffage de base est obtenu au moyen de trois électrodes (7) alimentées en courant triphasé.

8. Procédé selon l'une des revendications 6 ou 7, caractérisé en ce qu'une atmosphère contrôlée est maintenue dans la réserve (3) au-dessus du matériau fondu.

9. Procédé selon l'une des revendications 3 ou 4, caractérisé en ce que ledit chauffage de base est obtenu au moyen d'oxy-brûleurs.

10. Procédé selon l'une des revendications précédentes, caractérisé en ce que l'élévation de température du matériau fondu lors de son séjour dans la réserve (3) est comprise entre 50 et 250°C.

11. Procédé selon l'une des revendications 3 à 10, caractérisé en ce que la température de fibrage est régulée à ± 5°C par le chauffage additionnel.

12. Procédé selon l'une des revendications précédentes, caractérisé en ce que ladite réserve (3) correspond à au moins 8 minutes de production de la machine de fibrage et, de préférence, à au moins 10 minutes.

13. Dispositif d'obtention de fibres minérales comportant une enceinte de fusion (1), une réserve (3) constituée par un creuset (4) muni de moyens de chauffage (7) et d'un orifice de coulée (9) et une machine de fibrage (6), caractérisé en ce qu'il comporte des moyens propres à faire varier l'inclinaison de la réserve (3) selon un centre ou un axe de rotation placé de manière telle que le niveau de verre reste inchangé ou pratiquement inchangé et un bec de coulée (5) muni en son fond de cet orifice de coulée (9), le bec de coulée (5) ayant un volume d'au plus de l'ordre du dixième et, de préférence, de l'ordre du vingtième du volume total de la réserve (3).

14. Dispositif selon la revendication 13, caractérisé en ce que ladite réserve (3) est fixée à des suspentes de longueurs variables.

15. Dispositif selon la revendication 14, caractérisé en ce que lesdites suspentes sont constituées par des vérins à vis montés sur des rotules.

16. Dispositif selon l'une des revendications 13 à 15, caractérisé en ce que l'orifice de coulée (9) est constitué par une buse en graphite.

17. Dispositif selon l'une des revendications 13 à 16, caractérisé en ce que le fond du bec de coulée (5) est surélevé par rapport au niveau général de la réserve (3).

18. Dispositif selon l'une des revendications 13 à 17, caractérisé en ce que le bec de coulée (5) est monté détachable.

19. Dispositif selon l'une des revendications 13 à 18, caractérisé en ce que le creuset (4) est un four cylindrique dont les parois latérales (19) en acier sont doubles et refroidies à l'eau et le fond muni d'un pisé de carbone.

20. Dispositif selon l'une des revendications 13 à 19, caractérisé par des moyens de chauffage additionnels au voisinage de l'orifice de coulée (9) de la réserve (3).

21. Dispositif selon la revendication 20, caractérisé en ce que lesdits moyens de chauffage additionnels sont constitués par un jeu de deux électrodes (8) alimentées en courant biphasé.

22. Dispositif selon la revendication 20 ou la revendication 21, caractérisé en ce que les moyens de chauffage de base sont constitués par un jeu de trois électrodes (7) plongeantes alimentées en courant triphasé.

23. Dispositif selon l'une des revendications 20 à 22, caractérisé en ce que la réserve (3) est munie d'un couvercle (12) fixe traversé par les électrodes (7, 8).

24. Dispositif selon la revendication 23, caractérisé en ce que ledit couvercle (12) est muni d'une arrivée d'un gaz réducteur ou inerte.

25. Dispositif selon l'une des revendications 21 à 24, caractérisé en ce que les électrodes (7, 8) sont en graphite.

26. Dispositif selon la revendication 21, caractérisé en ce que lesdits moyens de chauffage de base sont constitués par des oxy-brûleurs, les électrodes servant de moyens de chauffage additionnel étant immergées.

## Claims

1. Process for obtaining mineral fibres from a thermoplastic material having a high melting point, consisting in the melting of the said material and its distribution in the molten state in the form of a stream, onto a fibre-drawing machine (6), the molten material forming on its path towards the fibre-drawing machine (6) a reservoir (3) where the flow rate is regulated, characterised in that the level of the molten material plumb with the tapping aperture is controlled by the inclination of the reservoir (3), the said reservoir (3) being inclined about a centre or axis of rotation located such that the level of the glass is unchanged or practically unchanged as a result of the inclination and the pouring being via the base of a lengthening piece (5) of the reservoir of which the volume is at most of the order of one tenth and preferably of the order of one twentieth of the total volume of the reservoir (3).

2. Process according to Claim 1, characterised in that the base of the said lengthening piece (5) is raised relative to that of the reservoir (3).

3. Process according to either of the preceding claims, characterised by a basic heating process in the reservoir (3) and an additional heating process in the vicinity of the tapping aperture (9) in order to adjust precisely the temperature of the stream of glass (17) distributed to the fibre-drawing machine.

4. Process according to Claim 3, characterised in that the said additional heating process is electrical.

5. Process according to Claim 4, characterised in that the said additional heating process is provided by means of two electrodes (8) supplied with two-phase current.

6. Process according to either of Claims 3 and 4, characterised in that the said basic heating process is electrical.

7. Process according to Claim 6, characterised in that the said basic heating process is provided by means of three electrodes (7) supplied with three-phase current.

8. Process according to either of Claims 6 and 7, characterised in that a controlled atmosphere is maintained in the reservoir (3) above the molten material.

9. Process according to either of Claims 3 and 4, characterised in that the said basic heating process is provided by means of oxyacetylene burners.

10. Process according to any one of the preceding claims, characterised in that the increase in the temperature of the molten material when it is held in the reservoir (3) is between 50 and 250°C.

11. Process according to any one of Claims 3 to 10, characterised in that the fibre-drawing temperature is regulated to within ± 5°C by the additional heating process.

12. Process according to any one of the preceding claims, characterised in that the said reservoir (3) corresponds to at least 8 minutes of production of the fibre-drawing machine and preferably at least 10 minutes.

13. Device for obtaining mineral fibres comprising a melting chamber (1), a reservoir (3) comprising a melting pot (4) provided with heating means (7) and with a tapping aperture (9) and a fibre-drawing machine (6), characterised in that it has means suitable for varying the inclination of the reservoir (3) about a centre or axis of rotation located such that the level of the glass is unchanged or practically unchanged and a pouring spout (5) provided at its base with this tapping aperture (9), the pouring spout (5) having a volume at most of the order of one tenth and preferably of the order of one twentieth of the total volume of the reservoir (3).

14. Device according to Claim 13, characterised in that the said reservoir (3) is secured on suspension posts of variable length.

15. Device according to Claim 14, characterised in that the said suspension posts comprise screw jacks mounted on pivot pins.

16. Device according to any one of Claims 13 to 15, characterised in that the tapping aperture (9) comprises a graphite nozzle.

17. Device according to any one of Claims 13 to 16, characterised in that the base of the pouring spout (5) is raised relative to the general level of the reservoir (3).

18. Device according to any one of Claims 13 to 17, characterised in that the pouring spout (5) is mounted so as to be detachable.

19. Device according to any one of Claims 13 to 18, characterised in that the melting pot (4) is a cylindrical furnace of which the side walls (19) made of steel are double and cooled by water and of which the base is provided with a carbon lining.

20. Device according to any one of Claims 13 to 19, characterised by additional heating means in the vicinity of the tapping aperture (9) of the reservoir (3).

21. Device according to Claim 20, characterised in that the said additional heating means comprise a set of two electrodes (8) supplied with two-phase current.

22. Device according to Claim 20 or Claim 21, characterised in that the basic heating means comprise a set of three dipped electrodes (7) supplied with three-phase current.

23. Device according to any one of Claims 20 to 22, characterised in that the reservoir (3) is provided with a fixed cover (12) through which the electrodes (7, 8) extend.

24. Device according to Claim 23, characterised in that the said cover (12) is provided with a reducing or inert gas inlet.

25. Device according to any one of Claims 21 to 24, characterised in that the electrodes (7, 8) are made of graphite.

26. Device according to Claim 21, characterised in that the said basic heating means comprise oxyacetylene burners, the electrodes acting as additional heating means being immersed.

## Patentansprüche

1. Verfahren zur Herstellung von Mineralfasern aus einem thermoplastischen Material mit hohem Schmelzpunkt, das aus dem Schmelzen des Materials und seiner Aufgabe im geschmolzenen Zustand in Form eines Strahls auf eine Zerfaserungseinheit (6) besteht, wobei das Schmelzematerial auf seinem Weg zur Zerfaserungseinheit (6) eine Reserve (3) bildet, an der eine Durchsatzregulierung durchgeführt wird, gekennzeichnet durch eine Kontrolle der Höhe des Schmelzematerials lotrecht über der Ausflußöffnung durch Neigen der Reserve (3), indem die Neigung der Reserve (3) über einen Drehpunkt bzw. eine Drehachse durchgeführt wird, welche derart angeordnet ist, daß der Glasspiegel aufgrund der Neigung unverändert bzw. praktisch unverändert ist und das Ausströmen durch den Boden eines Verlängerungsteils (5) der Reserve stattfindet, dessen Volumen höchstens in der Größenordnung eines Zehntels und vorzugsweise in der Größenordnung eines Zwanzigstels des Gesamtvolumens der Reserve (3) liegt.

2. Verfahren nach Anspruch 1, dadurch gekennzeichnet, daß der Boden des Verlängerungsteils (5) gegenüber demjenigen der Reserve (3) erhöht ist.

3. Verfahren nach einem der vorhergehenden Ansprüche, gekennzeichnet durch eine Grundbeheizung in der Reserve (3) und eine Zusatzbeheizung in der Nähe der Ausflußöffnung (9) für eine genaue Einstellung der Temperatur des an die Zerfaserungseinheit aufgegebenen Glasstrahls (17).

4. Verfahren nach Anspruch 3, dadurch gekennzeichnet, daß die Zusatzbeheizung elektrisch ist.

5. Verfahren nach Anspruch 4, dadurch gekennzeichnet, daß die Zusatzbeheizung mit zwei mit Zweiphasenstrom versorgten Elektroden (8) durchgeführt wird.

6. Verfahren nach einem der Ansprüche 3 oder 4, dadurch gekennzeichnet, daß die Grundbeheizung elektrisch ist.

7. Verfahren nach Anspruch 6, dadurch gekennzeichnet, daß die Grundbeheizung mit drei mit Drehstrom versorgten Elektroden (7) durchgeführt wird.

8. Verfahren nach einem der Ansprüche 6 oder 7, dadurch gekennzeichnet, daß in der Reserve (3) über dem Schmelzematerial eine kontrollierte Atmosphäre aufrechterhalten wird.

9. Verfahren nach einem der Ansprüche 3 oder 4, dadurch gekennzeichnet, daß die Grundbeheizung mittels Sauerstoffbrennern durchgeführt wird.

10. Verfahren nach einem der vorhergehenden Ansprüche, dadurch gekennzeichnet, daß die Temperaturerhöhung des Schmelzematerials bei seinem Verweilen in der Reserve (3) zwischen 50 und 250°C liegt.

11. Verfahren nach einem der Ansprüche 3 bis 10, dadurch gekennzeichnet, daß die Zerfaserungstemperatur durch die Zusatzbeheizung mit ±5°C eingestellt wird.

12. Verfahren nach einem der vorhergehenden Ansprüche, dadurch gekennzeichnet, daß die Reserve (3) einer Produktionszeit der Zerfaserungseinheit von mindestens 8 Minuten und vorzugsweise mindestens 10 Minuten entspricht.

13. Vorrichtung für die Herstellung von Mineralfasern, welche eine Schmelzkammer (1), eine Reserve (3), die aus einem mit Heizeinrichtungen (7) und einer Ausflußöffnung (9) versehenen Gefäß (4) besteht, und eine Zerfaserungseinheit (6) aufweist, dadurch gekennzeichnet, daß sie Mittel aufweist, die geeignet sind, die Neigung der Reserve (3) über einen Drehpunkt bzw. eine Drehachse zu variieren, welche derart angeordnet ist, daß der Glasspiegel unverändert bzw. praktisch unverändert bleibt, sowie einen in seinem Boden mit der Ausflußöffnung (9) versehenen Ausguß (5), wobei der Ausguß (5) ein Volumen aufweist, das mindestens in der Größenordnung eines Zehntels und vorzugsweise in der Größenordnung eines Zwanzigstels des Gesamtvolumens der Reserve (3) liegt.

14. Vorrichtung nach Anspruch 13, dadurch gekennzeichnet, daß die Reserve (3) an Hängern mit variablen Längen befestigt ist.

15. Vorrichtung nach Anspruch 14, dadurch gekennzeichnet, daß die Hänger aus Schraubenwinden bestehen, die an Kugelgelenken angebracht sind.

16. Vorrichtung nach einem der Ansprüche 13 bis 15, dadurch gekennzeichnet, daß die Ausflußöffnung (9) aus einer Graphitdüse besteht.

17. Vorrichtung nach einem der Ansprüche 13 bis 16, dadurch gekennzeichnet, daß der Boden des Ausgusses (5) gegenüber dem allgemeinen Niveau der Reserve (3) erhöht ist.

18. Vorrichtung nach einem der Ansprüche 13 bis 17, dadurch gekennzeichnet, daß der Ausguß (5) abnehmbar angebracht ist.

19. Vorrichtung nach einem der Ansprüche 13 bis 18, dadurch gekennzeichnet, daß das Gefäß (4) ein zylindrischer Ofen ist, dessen Seitenwände (19) aus Stahl doppelt und wassergekühlt sind und dessen Boden mit einem Kohlenstoffutter versehen ist.

20. Vorrichtung nach einem der Ansprüche 13 bis 19, gekennzeichnet durch Zusatzheizeinrichtungen in der Nähe der Ausflußöffnung (9) der Reserve (3).

21. Vorrichtung nach Anspruch 20, dadurch gekennzeichnet, daß die Zusatzheizeinrichtungen aus einer Gruppe von zwei mit Zweiphasenstrom versorgten Elektroden (8) bestehen.

22. Vorrichtung nach Anspruch 20 oder 21, dadurch gekennzeichnet, daß die Einrichtungen zur Grundbeheizung aus einer Gruppe von drei mit Drehstrom versorgten Tauchelektroden (7) bestehen.

23. Vorrichtung nach einem der Ansprüche 20 bis 22, dadurch gekennzeichnet, daß die Reserve (3) mit einem fest angebrachten Deckel (12) versehen ist, durch den hindurch die Elektroden (7, 8) verlaufen.

24. Vorrichtung nach Anspruch 23, dadurch gekennzeichnet, daß der Deckel (12) mit einer Zuleitung eines reduzierenden Gases oder eines Inertgases versehen ist.

25. Vorrichtung nach einem der Ansprüche 21 bis 24, dadurch gekennzeichnet, daß die Elektroden (7, 8) aus Graphit bestehen.

26. Vorrichtung nach Anspruch 21, dadurch gekennzeichnet, daß die Einrichtungen zur Grundbeheizung aus Sauerstoffbrennern bestehen, wobei die Elektroden, die als Zusatzheizeinrichtungen dienen, eingetaucht sind.
